**Europäisches Patentamt**

**European Patent Office**

**Office européen des brevets**

(11) Numéro de publication : **0 688 997 A1**

(19)

(12) # DEMANDE DE BREVET EUROPEEN

(21) Numéro de dépôt : **95401308.2**

(51) Int. Cl.⁶ : **F16L 58/10,** C08K 3/00

(22) Date de dépôt : **06.06.95**

(30) Priorité : **23.06.94 FR 9407718**

(43) Date de publication de la demande :
**27.12.95 Bulletin 95/52**

(84) Etats contractants désignés :
**AT BE DE ES FR GB IT NL SE**

(71) Demandeur : **ELF ATOCHEM S.A.**
**4 & 8, Cours Michelet**
**La Défense 10**
**F-92800 Puteaux (FR)**

(72) Inventeur : **Montagne, Philippe**
**34 rue de la Rouvière**
**F-64160 Morlaas (FR)**
Inventeur : **Pourtau, Jean**
**46bis, Boulevard Alsace Lorraine**
**F-64000 Pau (FR)**

(54) **Composition extrudable comprenant une charge minérale et un copolymère de l'éthylène pour le lestage des pipelines**

(57)    L'invention concerne une nouvelle composition extrudable comprenant une charge minérale non métallique, non hydrolysable, de densité supérieure à 3 et au moins un copolymère de l'éthylène, ainsi que l'application de cette composition pour revêtir les pipelines.

La composition selon l'invention contient de 1 à 10 % en poids d'unités copolymérisées issues de l'acétate de vinyl et/ou d'un ester acrylique et/ou d'un ester méthacrylique. La charge minérale est présente à raison de 65 à 90 % en poids.

EP 0 688 997 A1

La présente invention concerne une nouvelle composition extrudable comprenant une charge minérale et au moins un copolymère de l'éthylène, ainsi que l'application de cette composition pour revêtir les pipelines.

La pose des pipelines sur le fond des océans nécessite la mise au point de revêtements pour les protéger de la corrosion ainsi que pour les lester de façon à les empêcher de flotter au moment de leur pose. Une solution consiste à appliquer à la surface du pipeline tout d'abord une ou plusieurs couches de matériaux de type polymère destinés à le protéger de la corrosion, puis à lui appliquer une couche de béton dont l'intérêt principal est de l'alourdir conséquemment de façon à ce qu'il coule lors de sa pose.

L'application du béton dont le séchage est long et irréversible est une des étapes délicates de la préparation de ces pipelines. De plus, le béton est fragile car il présente un très faible allongement à la rupture.

La présente invention concerne une nouvelle composition extrudable comprenant 65 à 90 % en poids d'une charge minérale et au moins un copolymère de l'éthylène.

Cette composition est de forte densité et peut servir à lester les pipelines destinés à être posés au fond de l'eau. Cette composition est facile à mettre en oeuvre par transformation à chaud, par exemple par extrusion, par exemple à 180°C.

La composition selon l'invention présente une température de transition vitreuse au moins égale à 60°C. Elle est donc suffisamment stable pour être utilisable dans les pays chauds.

Cette composition présente de bonnes propriétés mécaniques, en particulier un allongement à la rupture élevé, généralement supérieur à 5 %.

Elle présente généralement un indice de fluidité compris entre 0,1 et 5 g/10 min à 190°C sous 2,16 kg.

Un indice de fluidité élevé est généralement souhaité pour qu'une composition soit extrudable. Il n'est cependant pas souhaitable qu'il dépasse 5 g/10 min à 190°C sous 2,16 kg car une composition présentant un tel indice de fluidité présente, même à une température inférieure à 60°C, de médiocres propriétés mécaniques, en particulier sur le plan de la résistance à la traction. L'incorporation de charges minérales dans un polymère tend toujours à faire baisser l'indice de fluidité de ce polymère et le rend de ce fait plus difficile à transformer.

Les charges en métal maléable comme le Zinc présentent l'avantage de pouvoir se déformer pendant l'extrusion et ainsi de moins endommager la filière d'extrusion et conduisent également de ce fait à des matériaux présentant des aspects de surface satisfaisants, c'est-à-dire peu de rugosité ou de défaut appelé généralement "peau de requin" ou "peau d'orange". Une surface avec peu de défauts est généralement souhaitée puisque l'on sait qu'un défaut de surface peut constituer une amorce de fissure et peut donc amoindrir les propriétés mécaniques et en particulier la résistance aux chocs de l'objet dont elle constitue la surface.

Les métaux constituent cependant des charges au coût prohibitif.

La charge minérale entrant dans la composition de l'invention est non-métallique et la composition selon l'invention est cependant facilement extrudable et conduit également par extrusion à des matériaux avec peu de défauts de surface.

La charge minérale entrant dans la composition de l'invention peut être choisie parmi les composés minéraux non-métalliques et non-hydrolysables de densité supérieure à 3. Ce composé peut être choisi par exemple parmi les oxydes ou les sulfates non-hydrolysables de densité supérieure à 3 des éléments au numéro atomique supérieur à 19 des colonnes 1a, 2a, 3b, 4b, 5b, 6b, 7b, 8, 1b, 2b, 3a et 4a du tableau périodique tel que défini dans le "Handbook of Chemistry and Physics", 61ème édition.

Parmi tous ces composés, les sulfates sont préférés et le sulfate de Baryum est particulièrement préféré.

Par composé non hydrolysable, on entend un composé dont la solubilité dans l'eau à 20°C est inférieure à $1.10^{-2}$ gramme pour 100 ml d'eau.

La charge minérale introduite dans la composition selon l'invention est une poudre dont le diamètre moyen est de préférence inférieur à 500 μm, et de manière encore préférée compris entre 20 et 200 μm. Dans la présente demande, par diamètre moyen, on entend le diamètre en dessous duquel se trouvent 50 % en poids des particules constituant la poudre.

La composition selon l'invention comprend 10 à 35 % en poids d'au moins un copolymère de l'éthylène et d'au moins un monomère choisi parmi l'acétate de vinyl, les esters acryliques et les esters méthacryliques.

De préférence, la quantité totale d'unités de copolymère issues de l'acétate de vinyl et/ou d'un ester acrylique et/ou d'un ester méthacrylique va de 1 à 10 % et de manière encore préférée de 2 à 7 % en poids par rapport au poids total de la composition selon l'invention.

De préférence le rapport R du pourcentage volumique de charge minérale de densité supérieure à 3 sur le pourcentage en poids d'unités copolymérisées issues de l'acétate de vinyl et/ou d'un ester acrylique et/ou d'un ester méthacrylique est compris entre 2 et 22 et de manière encore préférée entre 2,5 et 10.

Les unités copolymérisées issues de l'acétate de vinyl et/ou d'un ester acrylique et/ou d'un ester méthacrylique peuvent être présentes dans différents copolymères au sein de la composition selon l'invention.

De préférence, la composition contenant tous les ingrédients de la composition selon l'invention excepté la charge minérale de densité supérieure à 3, présente un indice de fluidité allant de 2 à 21 g/10 min à 190°C sous 2,16 kg.

On peut citer comme esters acryliques ceux dont le groupement hydrocarboné du radical ester est aliphatique linéaire ou ramifié, ou alicyclique éventuellement substitué, et comporte de un à dix atomes de carbone, comme l'acrylate de méthyle, l'acrylate d'éthyle, l'acrylate de butyle.

On peut citer comme esters méthacryliques ceux dont le groupement hydrocarboné du radical ester est aliphatique linéaire ou ramifié ou alicyclique éventuellement substitué et comporte de un à dix atomes de carbone comme le méthacrylate de méthyle, le méthacrylate d'éthyle, le méthacrylate de butyle.

De préférence, la composition selon l'invention ne contient pas de copolymère contenant des unités issues de l'anhydride maléïque.

La composition selon l'invention peut également contenir les adjuvants habituels à ce genre de composition, comme au moins un plastifiant et/ou au moins un lubrifiant et/ou au moins un antioxydant et/ou au moins un stabilisant.

La composition selon l'invention peut contenir du noir de carbone de façon à protéger les polymères et/ou copolymères qu'elle contient des rayonnements ultraviolet. Ce noir de carbone peut être présent en une teneur allant de 1,5 à 4 % en poids de la somme du poids du noir de carbone du poids de la totalité des polymères et/ou copolymères contenus dans la composition selon l'invention.

Les ingrédients entrant en jeux dans la composition selon l'invention peuvent être mélangés dans n'importe quel ordre. Le mélange de ces ingrédients peut être réalisé par les techniques habituelles, connues de l'homme du métier, pour mélanger les polymères et les charges minérales. Ce mélange est réalisé par malaxage à une température supérieure au point de fusion des polymères et/ou copolymères destinés à rentrer dans la composition.

La présente invention concerne également les pipelines revêtus des compositions ci-dessus présentées. De façon à ce que les pipelines ainsi revêtus coulent au fond de l'eau au moment de leur pose, il convient d'appliquer une couche suffisamment épaisse de la composition selon l'invention pour que ledit pipeline rempli d'air à la pression atmosphérique normale présente une densité supérieure à 1.

La composition selon l'invention peut être appliquée en surface du pipeline par toute technique d'extrusion adaptée.

Généralement, le pipeline destiné à être revêtu par la composition selon l'invention est constitué d'un tube en acier sur lequel ont été appliquées une ou plusieurs couches d'une résine époxy et/ou d'un adhésif et/ou d'une polyoléfine comme le polyéthylène ou le polypropylène.

Ci-après est donnée la signification des dénominations représentant les polymères ou copolymères utilisés dans les exemples. Les indices de fluidité ont été déterminés comme ceux des compositions selon l'invention (norme ISO 1133):

EVA 24 :  copolymère éthylène-acétate de vinyl dont 24 % en poids des unités sont issues de l'acétate de vinyl. L'indice de fluidité de ce copolymère est de 3 g/10 min à 190°C sous 2,16 kg.

EVA 28 :  copolymère éthylène-acétate de vinyl dont 28 % en poids des unités sont issues de l'acétate de vinyl. L'indice de fluidité de ce copolymère est de 7 g/10 min à 190°C sous 2,16 kg.

EVA 33 :  copolymère éthylène-acétate de vinyl dont 33 % en poids des unités sont issues de l'acétate de vinyl. L'indice de fluidité de ce copolymère est de 25 g/10 min à 190°C sous 2,16 kg.

EBAAM :  copolymère éthylène-acrylate de butyle-anhydride maléïque dont 9 % en poids des unités sont issues de l'acrylate de butyle et 3 % en poids des unités sont issues de l'anhydride maléïque. L'indice de fluidité de ce copolymère est de 5 g/10 min à 190°C sous 2,16 kg.

MMC :  mélange contenant 35 % en poids de noir de carbone commercialisé sous la marque PRINTEX P par la société DEGUSSA, 62,6 % en poids de copolymère éthylène-acétate de vinyl dont 28 % en poids des unités sont issues de l'acétate de vinyl et 2,4 % d'un anti-oxydant phénolique de marque Irganox 1010 commercialisé par la société CIBA. Ce mélange présente un indice de fluidité de 2 g/10 min à 190°C sous 2,16 kg.

Dans les exemples, les compositions ont été caractérisées par les techniques suivantes :
- Allongement à rupture : norme ISO R 527
- Indice de fluidité à 190°C sous une charge de 2,16 kg : norme ISO 1133
- Etat de surface : la surface de la composition, après extrusion, est notée de 0 à 3 par une même personne sur la qualité de son aspect à l'oeil nu. Une surface sans défaut recueille la note 3, alors qu'une surface irrégulière recueille la note 0.

Dans les exemples, la charge de $BaSO_4$ utilisée présente un diamètre moyen de 90 μm.

Dans les exemples, la charge de $PbO$ utilisée présente un diamètre moyen de 30 μm.

Le tableau 1 rassemble les caractéristiques et les propriétés des compositions des exemples. Dans le tableau 1, les valeurs dans la colonne "% en volume de charge minérale de densité > 3" caractérisent le pourcentage en volume de charge minérale de densité > 3, c'est à dire de BaSO$_4$ ou de PbO pour les exemples 1 à 7, noir de carbone exclu, par rapport au volume total de la composition.

Dans le tableau 1, les valeurs dans la colonne "% en poids.......méthacrylique" caractérisent un pourcentage en poids par rapport au poids total de la composition. Ces valeurs ont été obtenues en faisant, pour une composition donnée, la somme des pourcentages en poids d'unités issues de l'acétate de vinyl et/ou ester acrylique et/ou ester méthacrylique, de chacun des ingrédients de ladite composition, y compris le mélange dit "MMC".

Dans le tableau 1, les valeurs dans la colonne R caractérisent le rapport du pourcentage en volume de charge minérale de densité supérieur à 3 sur le pourcentage en poids d'unités issues de l'acétate de vinyl et/ou d'ester acrylique et/ou d'ester méthacrylique.

Dans le tableau 1, les valeurs dans la colonne "IF hors charge" donnent la valeur des indices de fluidité à 190°C sous 2,16 kg des compositions contenant tous les ingrédients des compositions selon l'invention des exemples excepté la charge minérale de densité supérieure à 3.

Les exemples montrent en particulier la forte influence de la nature de la charge sur les résultats. On remarque en particulier en comparant les exemples 4 et 7 que pour un taux volumique bien supérieur, le BaSO$_4$ mène à un allongement à rupture identique, une meilleure extrudabilité et un meilleur indice de fluidité que le PbO avec un taux volumique bien inférieur. Une constatation équivalente peut être faite si l'on compare entre eux les exemples 6 et 8.

## EXEMPLES 1 à 7

On mélange à l'aide d'un malaxeur double vis à 180°C les ingrédients précisés dans la colonne "composition" du tableau 1. Le mélange ainsi obtenu est ensuite extrudé à 180°C, puis passé dans une granulatrice de façon à obtenir des granulés de longueur 3 mm et de diamètre 2 mm environ.

Le tableau 1 rassemble les propriétés physiques de la composition ainsi réalisée.

Cette composition est ensuite extrudée à 160°C avec une vitesse linéaire de 5 mètres par minute par extrusion annulaire autour d'un pipeline constitué d'un tube d'acier de diamètre externe 113 mm et de diamètre interne 101 mm revêtu tout d'abord d'une couche de 70 μm d'une résine époxy sur laquelle a été appliquée une couche de 0,3 mm d'adhésif sur laquelle a été appliquée une couche de 3 mm de polyéthylène. La couche de composition selon l'invention présente une épaisseur d'environ 1 cm.

L'adhésif ici utilisé est un terpolymère éthylène-acétate de vinyl-anhydride maléique à 10 % en poids d'acétate de vinyl et 1 % en poids d'anhydride maléique.

Le pipeline ainsi revêtu coule au fond de l'eau et est stable en milieu marin.

| EXEMPLE N° | COMPOSITION (% poids) | % en volume de charge minérale de densité > 3 | % en poids d'unités issues de l'acétate de vinyl, d'un ester acrylique et d'un ester méthacrylique | R | IF hors charge (g/10min) | Densité de la composition | Allonge-ment à rupture | Etat de surface | Indice de fluidité (g/10 min) |
|---|---|---|---|---|---|---|---|---|---|
| 1 | 85 % BaSO4 5 % EVA 24 4 % EBAAM 6 % MMC | 55,9 % | 2,65 % | 21,1 | 4,5 | 2,9 | 7 % | 0 | 0,14 |
| 2 | 75 % PbO 15 % EVA 24 4 % EBAAM 6 % MMC | 22,9 % | 5,05 % | 4,5 | 3,8 | 3 | 80 % | 0 | < 0,1 |
| 3 | 80 % BaSO4 10 % EVA 24 4 % EBAAM 6 % MMC | 47,2 % | 3,85 % | 12,3 | 4 | 2,6 | 7 % | 0 | 0,1 |
| 4 | 70 % BaSO4 20 % EVA 24 4 % EBAAM 6 % MMC | 34,3 % | 6,25 % | 5,5 | 3,6 | 2,2 | 70 % | 2 | 1,4 |
| 5 | 80 % BaSO4 10 % EVA 28 4 % EBAAM 6 % MMC | 47,2 % | 4,25 % | 11,1 | 6,6 | 2,6 | 20 % | 1 | 1 |
| 6 | 80 % BaSO4 14 % EVA 33 6 % MMC | 47,2 % | 5,71 % | 8,3 | 18 | 2,6 | 400 % | 3 | 3,5 |

**TABLEAU 1**

EP 0 688 997 A1

| EXEMPLE N° | COMPOSITION (% poids) | % en volume de charge minérale de densité > 3 | % en poids d'unités issues de l'acétate de vinyl, d'un ester acrylique et d'un ester méthacrylique | R | IF hors charge (g/10min) | Densité de la composition | Allongement à rupture | Etat de surface | Indice de fluidité (g/10 min) |
|---|---|---|---|---|---|---|---|---|---|
| 7 | 70 % PbO 20 % EVA 24 4 % EBAAM 6 % MMC | 18,8 % | 6,25 % | 3 | 3,6 | 2,65 | 70 % | 0 | < 0,1 |
| 8 | 80 % PbO 14 % EVA 33 6 % MMC | 28,4 % | 5,71 % | 5 | 18 | 3,31 | 100 % | 1 | 1,5 |

**TABLEAU 1 (suite)**

EP 0 688 997 A1

**Revendications**

1. Pipeline caractérisé en ce qu'il est revêtu d'une composition comprenant une charge minérale et un copolymère de l'éthylène, et en ce que
   - la charge minérale est non hydrolysable, non métallique, de densité supérieure à 3 et est présente dans ladite composition à raison de 65 à 90 % en poids,
   - ladite composition contient de 1 à 10 % en poids d'unités copolymérisées issues de l'acétate de vinyl et/ou d'un ester acrylique et/ou d'un ester méthacrylique.

2. Pipeline selon la revendication 1 caractérisé en ce la composition contient de 2 à 7 % en poids d'unités copolymérisées issues de l'acétate de vinyl et/ou d'un ester acrylique et/ou d'un ester méthacrylique.

3. Pipeline selon la revendication 1 ou 2 caractérisé en ce que le rapport R du pourcentage en volume de la charge minérale de densité supérieure à 3 sur le pourcentage en poids d'unités copolymérisées issues de l'acétate de vinyl et/ou d'un ester acrylique et/ou d'un ester méthacrylique est compris entre 2 et 22.

4. Pipeline selon la revendication 3 caractérisé en ce que le rapport R est compris entre 2,5 et 10.

5. Pipeline selon l'une des revendications 1 à 4 caractérisé en ce que la charge minérale est le sulfate de Baryum.

6. Pipeline selon l'une des revendications 1 à 5 caractérisé en ce que la charge minérale est une poudre de diamètre moyen inférieur à 500 $\mu$m, et de préférence compris entre 20 et 200 $\mu$m.

7. Pipeline selon l'une des revendications 1 à 6 caractérisé en ce que la composition contenant tous les ingrédients de la composition selon l'invention excepté la charge minérale de densité supérieure à 3, présente un indice de fluidité allant de 2 à 21 g/10 min à 190°C sous 2,16 kg.

8. Pipeline selon l'une des revendications 1 à 7 caractérisé en ce que la composition comprend du noir de carbone.

9. Pipeline selon la revendication 8 caractérisé en ce que le noir de carbone est présent à raison de 1,5 % à 4 % en poids de la somme du poids du noir de carbone et du poids de la totalité des polymères et/ou copolymères contenus dans la composition.

10. Pipeline selon l'une des revendications 1 à 9 caractérisé en ce qu'il est constitué d'un tube en acier sur lequel ont été appliquées une ou plusieurs couches d'une résine époxy et/ou d'un adhésif et/ou d'une polyoléfine puis la composition comprenant une charge minérale et un copolymère de l'éthylène.

Office européen
des brevets

**RAPPORT DE RECHERCHE EUROPEENNE**

Numero de la demande

EP 95 40 1308

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 019 926 (UNION CARBIDE) <br> * page 2, ligne 35 - page 3, ligne 14 * <br> * page 3, ligne 30 - page 4, ligne 16 * <br> --- | 1-10 | F16L58/10 <br> C08K3/00 |
| Y | FR-A-2 035 670 (TEROSON WERKE) <br> * exemples 1-3 * <br> --- | 1-10 | |
| Y | EP-A-0 054 209 (BASF) <br> * le document en entier * <br> ----- | 1-10 | |

DOMAINES TECHNIQUES RECHERCHES (Int.Cl.6)

F16L
C08K

Le présent rapport a été établi pour toutes les revendications

| Lieu de la recherche | Date d'achèvement de la recherche | Examinateur |
|---|---|---|
| LA HAYE | 21 Septembre 1995 | Schmidt, H |

EPO FORM 1503 03.82 (P04C02)